# EUROPEAN PATENT APPLICATION

(11) **EP 3 009 199 A2**
(43) Date of publication of application: **20.04.2016**
(21) Application number: 15189632.1
(22) Date of filing: 13.10.2015
(51) Int. Cl.: B06B 1/06, G01H 9/00, G01N 29/22, G10K 11/32, G10K 11/34, G10K 11/35

(54) **ULTRASONIC GENERATOR**

(30) Priority: 15.10.2014 JP 2014211187
(71) Applicant: Kabushiki Kaisha Toshiba, Minato-ku Tokyo 105-8001 (JP)
(72) Inventor: Takayasu, Toshiki, Minato-ku, Tokyo 105-8001 (JP); Nishimura, Osamu, Minato-ku, Tokyo 105-8001 (JP)
(74) Representative: Moreland, David

(57) **Abstract**

According to one embodiment, an ultrasonic generator (10) includes ultrasonic transducers (22) and a drive unit (12). The ultrasonic transducers (22) each generate an ultrasonic wave. The drive unit (12) supplies a drive signal generating the ultrasonic wave to each of the ultrasonic transducers (22), and changes phase of the drive signal supplied to a second ultrasonic transducer (22-2) relative to the drive signal supplied to a first ultrasonic transducer (22-1). The second ultrasonic transducer (22-2) is located in a position in which a traveling direction of a combined wave front of a first combined wave is aligned with a frontal direction, the first combined wave being formed by combining the ultrasonic waves generated by the first ultrasonic transducer (22-1) and the second ultrasonic transducer (22-2), wherein the position is more frontward in the frontal direction of the first ultrasonic transducer (22-1) than the first ultrasonic transducer (22-1).

## Description

### FIELD

Embodiments described herein relate generally to an ultrasonic generator.

### BACKGROUND

Ultrasonic generators are heretofore known that generate a combined wave by combining a plurality of ultrasonic waves emitted from a plurality of ultrasonic elements.

### BRIEF DESCRIPTION OF THE DRAWINGS

FIG. 1 is an exemplary diagram illustrating an ultrasonic generator in according to a first embodiment and a target object;
FIG. 2 is an exemplary front view of a speaker in the first embodiment;
FIG. 3 is a diagram illustrating the speaker in the first embodiment when viewing from an arrow III in FIG. 2;
FIG. 4 is an exemplary diagram illustrating a drive unit in the first embodiment;
FIG. 5 is an explanatory diagram for explaining currents supplied to the speaker in the first embodiment;
FIG. 6 is an exemplary diagram illustrating a speaker of a comparative example;
FIG. 7 is an explanatory diagram for explaining currents supplied to the speaker of the comparative example;
FIG. 8 is an exemplary diagram illustrating a speaker in according to a second embodiment;
FIG. 9 is an exemplary diagram illustrating an ultrasonic generator in according to a third embodiment and the target object;
FIG. 10 is an exemplary diagram illustrating an ultrasonic generator in according to a fourth embodiment and the target object;
FIG. 11 is an exemplary diagram illustrating an ultrasonic generator in according to a fifth embodiment and the target object;
FIG. 12 is an exemplary front view of a speaker in the fifth embodiment;
FIG. 13 is a view of the speaker in the fifth embodiment when viewing from an arrow XIII in FIG. 12;
FIG. 14 is an explanatory diagram for explaining currents supplied to the speaker in the fifth embodiment;
FIG. 15 is an exemplary diagram illustrating an ultrasonic generator in according to a sixth embodiment and the target object;
FIG. 16 is an exemplary front view of a speaker in according to a seventh embodiment; and
FIG. 17 is an exemplary sectional diagram illustrating the speaker in the seventh embodiment when cutting along XVII-XVII in FIG. 16.

### DETAILED DESCRIPTION

In general, according to one embodiment, an ultrasonic generator comprises a plurality of ultrasonic transducers and a drive unit. The ultrasonic transducers each are configured to generate an ultrasonic wave. The drive unit is configured to supply a drive signal generating the ultrasonic wave to each of the ultrasonic transducers, and configured to change phase of the drive signal supplied to a second ultrasonic transducer among the ultrasonic transducers relative to the drive signal supplied to a first ultrasonic transducer among the ultrasonic transducers. The second ultrasonic transducer is located in a position in which a traveling direction of a combined wave front of a first combined wave is aligned with a frontal direction, the first combined wave being formed by combining the ultrasonic waves generated by each of the first ultrasonic transducer and the second ultrasonic transducer, wherein the position is more frontward in the frontal direction of the first ultrasonic transducer than the first ultrasonic transducer.

The following exemplary embodiments include the same components. Hence, in the following description, the same components will be given common reference numerals, and description thereof will be partially omitted. Configurations of the embodiments described below, and operations, result, and effects provided by the configurations are mere examples.

### First Embodiment

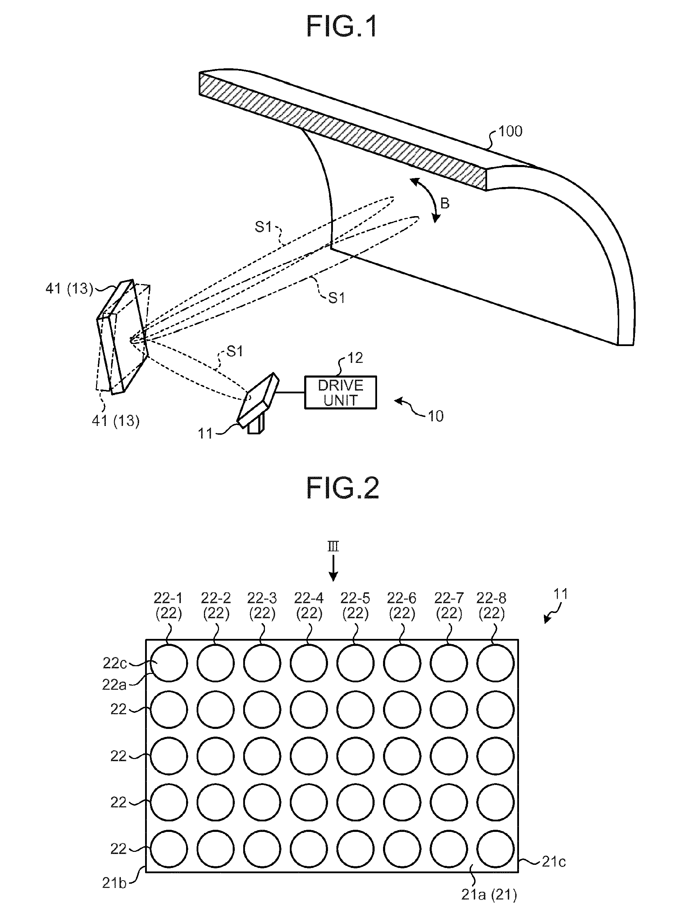

A first embodiment will be described with reference to FIGS. 1 to 5. As illustrated in FIG. 1, an ultrasonic generator (oscillator) 10 in the first embodiment can oscillate a target object 100, for example, by emitting an ultrasonic wave S1 to the target object 100. In other words, the ultrasonic generator 10 can operate as an oscillator for oscillating the target object 100. The ultrasonic generator 10 can be provided, for example, in an inspection system for inspecting the target object 100 in a noncontact manner. The inspection system includes, for example, a vibration measuring device and a defect detecting device in addition to the ultrasonic generator 10. The vibration measuring device uses a laser beam to measure vibration of a surface of the target object 100 generated by being oscillated by the ultrasonic generator 10. The vibration measuring device includes, for example, a laser Doppler vibrometer. The defect detecting device determines whether the target object 100 has any defects, based on the vibration of the surface of the target object 100 measured by the vibration measuring device. The target object 100 is, for example, a wall of a tunnel, and the defects are, for example, cavities. The ultrasonic generator 10 can also be used, for example, in a system for analyzing a heat receiving state of the target object 100.

The ultrasonic generator 10 includes a speaker 11, a drive unit 12, and a scan unit 13. The speaker 11 is driven by the drive unit 12 to generate the ultrasonic wave S1 (an ultrasonic beam or a sound wave) having directivity. The scan unit 13 scans the target object 100 with the ultrasonic wave S1.

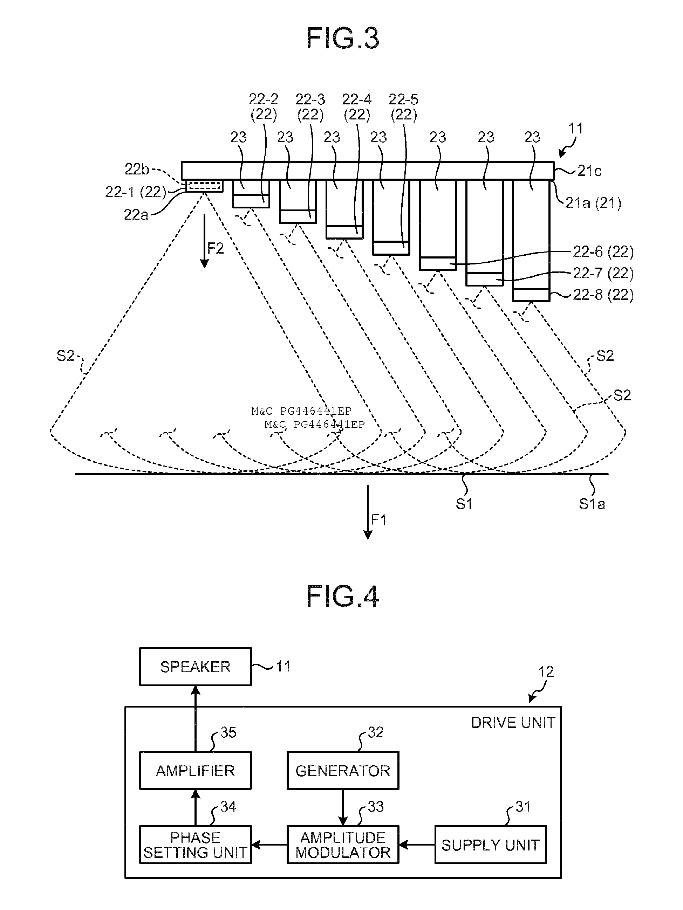

As illustrated in FIGS. 2 and 3, the speaker 11 includes a substrate 21 and a plurality of ultrasonic transducers 22. The speaker 11 is configured as a parametric speaker. The ultrasonic transducers 22 are also called an ultrasonic transducer array.

The substrate 21 is configured in a rectangular plate-like shape. The substrate 21 has a rectangular planar mounting surface 21a.

The ultrasonic transducers 22 are mounted on the mounting surface 21a. Each of the ultrasonic transducers 22 generates an ultrasonic wave S2 (FIG. 3). A plurality of such ultrasonic waves S2 emitted from the ultrasonic transducers 22 are combined to form the ultrasonic wave S1. The ultrasonic wave S1 is an example of a first combined wave (combined wave).

As illustrated in FIG. 3, each of the ultrasonic transducers 22 includes a housing 22a and an oscillator 22b (vibrating plate). FIG. 3 illustrates the oscillator 22b of only one of the ultrasonic transducers 22, not illustrating the oscillator 22b of the other ultrasonic transducers 22. An aperture (not illustrated) is provided in an end 22c (end surface) of the housing 22a on the side opposite to the side mounted on the mounting surface 21a. The housing 22a accommodates the oscillator 22b. The oscillator 22b is formed from, for example, a piezoelectric element, and vibrates by being supplied with a current. The vibration of the oscillator 22b generates the ultrasonic wave S2, and the generated ultrasonic wave S2 is emitted from the aperture of the housing 22a.

Each of the ultrasonic transducers 22 is arranged so that a frontal direction F2 of the ultrasonic transducer 22 is substantially orthogonal to the mounting surface 21a. In FIG. 3, an arrow indicating the frontal direction F2 is illustrated for only one of the ultrasonic transducers 22, and not illustrated for the other ultrasonic transducers 22. The frontal direction F2 of the ultrasonic transducer 22 coincides with the direction of vibration of the oscillator 22b. The frontal direction F2 of the ultrasonic transducer 22 also coincides with the direction of the sound axis of the ultrasonic wave S2 and the central axis of the ultrasonic transducer 22.

As illustrated in FIG. 2, the ultrasonic transducers 22 are arranged in a matrix of M (M is an integer) rows and N (N is an integer) columns. As an example, the matrix of the ultrasonic transducers 22 has five rows and eight columns. For the sake of convenience of explanation, a column on one side 21b (on the left side in FIG. 2) of the substrate 21 is denoted as a first column whereas a column on another side 21c (on the right side in FIG. 2) opposite to the side 21b of the substrate 21 is denoted as an eighth column (Nth column), and the ultrasonic transducers 22 are also called ultrasonic transducers 22-1 to 22-8 in the order from the first column to the eighth column. Accordingly, each row of the ultrasonic transducers 22 includes the ultrasonic transducers 22-1 to 22-8.

As illustrated in FIG. 3, the ultrasonic transducers 22-1 to 22-8 of the respective rows are arranged in a stepwise manner. The ultrasonic transducers 22-2 to 22-8 among the ultrasonic transducers 22-1 to 22-8 of the respective rows are connected to the mounting surface 21a via projections 23 (support portion). The projecting amount of each of the projections 23 from the mounting surface 21a sequentially increases from that of the ultrasonic transducer 22-2 to that of the ultrasonic transducer 22-8. This configuration locates each of (the ends 22c of) the ultrasonic transducers 22-1 to 22-8 of the respective rows at a distance from the mounting surface 21a of the substrate 21 sequentially increasing from the ultrasonic transducer 22-1 to the ultrasonic transducer 22-8. In other words, with respect to the ultrasonic transducer 22-1, the distance along the frontal direction F2 of each of the ultrasonic transducers 22-2 to 22-8 from the ultrasonic transducer 22-1 sequentially increases from that of the ultrasonic transducer 22-2 to that of the ultrasonic transducer 22-8.

As illustrated in FIG. 4, the drive unit 12 includes a supply unit 31, a generator 32, an amplitude modulator 33, a phase setting unit 34 (delay unit), and an amplifier 35. The supply unit 31 supplies an acoustic signal to the amplitude modulator 33. The acoustic signal may have, for example, a constant frequency. The generator 32 generates a carrier signal having a frequency in an ultrasonic band, and supplies the generated carrier signal to the amplitude modulator 33. The amplitude modulator 33 amplitude-modulates the carrier signal using the acoustic signal to obtain a drive signal (modulated signal). The phase setting unit 34 sets a phase of the drive signal. The amplifier 35 amplifies the drive signal. The drive signal amplified by the amplifier 35 is supplied to the speaker 11. The supplied drive signal drives the respective ultrasonic transducers 22. The speaker 11 is driven by the drive signal to emit the ultrasonic wave S1. The ultrasonic wave S1 propagates through the air (medium), so that waveform distortion occurs in the ultrasonic wave S1. This operation demodulates the ultrasonic wave S1 into the same audible sound signal as the acoustic signal.

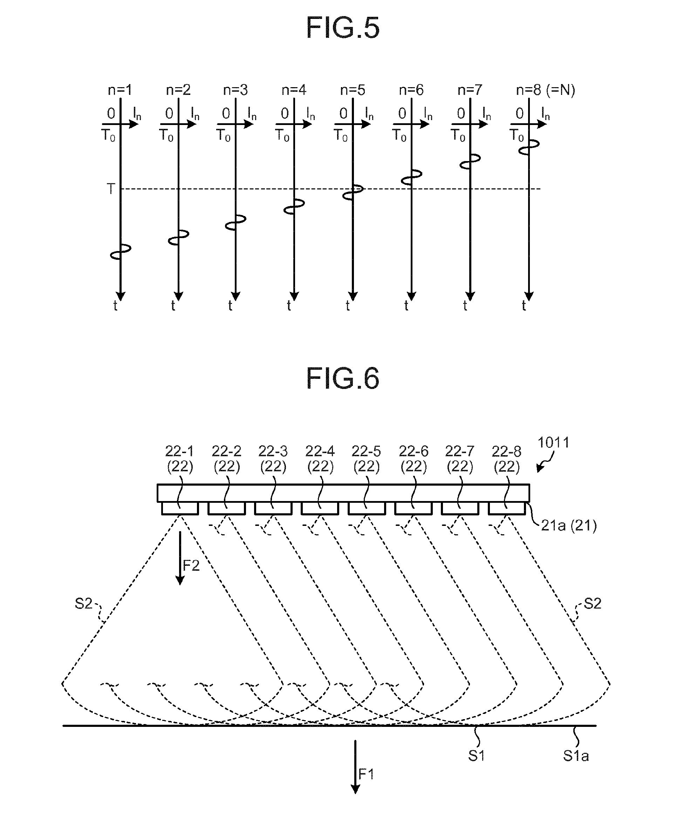

The drive unit 12 supplies, from the amplifier 35, the drive signal for generating the ultrasonic wave S2 to each of the ultrasonic transducers 22. At this time, the drive unit 12 changes the phase of the drive signal supplied to each of the ultrasonic transducers 22 so as to shift the phases of currents supplied to the respective ultrasonic transducers 22 from one another. In other words, the drive unit 12 drives the ultrasonic transducers 22 at different phases. FIG. 5 illustrates a relation between a current (denoted as In in FIG. 5) supplied to each of the columns (n = 1 to 8) in accordance with the drive signal and time (denoted as t in FIG. 5). To in FIG. 5 represents a reference time (initial time). The drive unit 12 sets the phase of the drive signal of each of the ultrasonic transducers 22 so that the phases of the currents supplied to the respective ultrasonic transducers 22 are shifted from one another, and the sum of consumption currents of the ultrasonic transducers 22 at the same time point is lower than the sum of maximum consumption currents of the ultrasonic transducers 22. When denoting the order of each of the columns as n (n = 1 for the first column), the maximum value (maximum amplitude) of the current caused by the drive signal as I₀, the angular frequency of the carrier signal as ω_{c}, the angular frequency of the acoustic signal as ωₛ, the degree of modulation as m, the phase difference of a drive signal other than a reference drive signal with respect to the reference drive signal as φₙ, the time as t, and the current supplied to each of the ultrasonic transducers 22 as Iₙ, the current Iₙ is represented as Iₙ = I₀[1 + m*sin (ωₛt + φₙ)] cos (ω_{c}t). Consequently, the sum of absolute values of the currents Iₙ supplied to the ultrasonic transducers 22 at a certain time point corresponds to the sum of consumption currents of the ultrasonic transducers 22 at that time point, that is, the instantaneous power consumption of the speaker 11 at that time point. For example, at a time point t = T in FIG. 5, only the ultrasonic transducer 22 of n = 4, that is, only the ultrasonic transducer 22-4 is supplied with a current, so that the current Iₙ (for example, the current I₀) supplied to the ultrasonic transducer 22-4 at this time corresponds to the instantaneous power consumption of the speaker 11.

In detail, to supply the currents described above to the respective ultrasonic transducers 22, the phase setting unit 34 changes the phases of drive signals supplied to the ultrasonic transducers 22-2 to 22-8 (second ultrasonic transducers) among the ultrasonic transducers 22 relative to the drive signal supplied to the ultrasonic transducer 22-1 (first ultrasonic transducer) serving as a reference among the ultrasonic transducers 22. Specifically, the phase setting unit 34 changes the phases of the drive signals by delaying the drive signals supplied to the ultrasonic transducers 22-2 to 22-8 relative to the drive signal supplied to the ultrasonic transducer 22-1. The phase setting unit 34 sequentially increases the delay amount relative to the drive signal supplied to the ultrasonic transducer 22-1 from the ultrasonic transducer 22-2 to the ultrasonic transducer 22-8. For example, the phase setting unit 34 shifts the drive signal supplied to each of the ultrasonic transducers 22-1 to 22-8 one period by one period (one specified period). In this way, the drive unit 12 changes the phases of the drive signals supplied to the ultrasonic transducers 22-2 to 22-8 among the ultrasonic transducers 22 relative to the drive signal supplied to the ultrasonic transducer 22-1 so that the sum of the consumption currents of the respective ultrasonic transducers 22 at the same time point is lower than the sum of the maximum consumption currents of the respective ultrasonic transducers 22.

The following describes a relation between the phase difference of the drive signal and the position of each of the ultrasonic transducers 22-1 to 22-8. As illustrated in FIG. 3, each of the ultrasonic transducers 22-2 to 22-8 is located more frontward in the frontal direction F2 from the ultrasonic transducer 22-1 as the delay amount (phase difference) of the drive signal supplied to each of the ultrasonic transducers 22-2 to 22-8 increases relative to the drive signal supplied to the ultrasonic transducer 22-1. In detail, the ultrasonic transducers 22-2 to 22-8 are located in positions that are more frontward in the frontal direction F2 of the ultrasonic transducer 22-1 than the ultrasonic transducer 22-1 and in which a traveling direction F1 of a combined wave front S1a of the ultrasonic wave S1 is aligned with the frontal direction F2 of the ultrasonic transducer 22-1. In other words, as each of the ultrasonic transducers 22 is more distant from the mounting surface 21a on the basis of the ultrasonic transducer 22 closest to the mounting surface 21a of substrate 21 among the ultrasonic transducers 22, the phase setting unit 34 increases the delay amount of the drive signal supplied to the ultrasonic transducer 22.

As illustrated in FIG. 1, the scan unit 13 includes a movable reflecting member 41 (sound reflecting mirror). The movable reflecting member 41 reflects the ultrasonic wave S1 (ultrasonic waves S2) toward the target object 100, and scans the ultrasonic wave S1 on the target object 100. Specifically, the movable reflecting member 41 is provided so as to be rotatable about one axis. The movable reflecting member 41 is driven by a motor and reciprocates about the axis so as to linearly scan the ultrasonic wave S1 on the target object 100. In FIG. 1, arrow B indicates an example of the direction for scanning the ultrasonic wave S1. The movable reflecting member 41 is formed from, for example, a synthetic resin material such as an acrylic resin. The movable reflecting member 41 may be formed from a material other than the synthetic resin material.

As described above, the drive unit 12 supplies the drive signals for generating the ultrasonic waves S2 to the respective ultrasonic transducers 22. The drive unit 12 changes the phases of the drive signals supplied to the ultrasonic transducers 22-2 to 22-8 among the ultrasonic transducers 22 relative to the drive signal supplied to the ultrasonic transducer 22-1 among the ultrasonic transducers 22 so that the sum of the consumption currents of the respective ultrasonic transducers 22 at the same time point is lower than the sum of the maximum consumption currents of the respective ultrasonic transducers 22. As a result, the instantaneous power consumption of the ultrasonic generator 10 can be reduced.

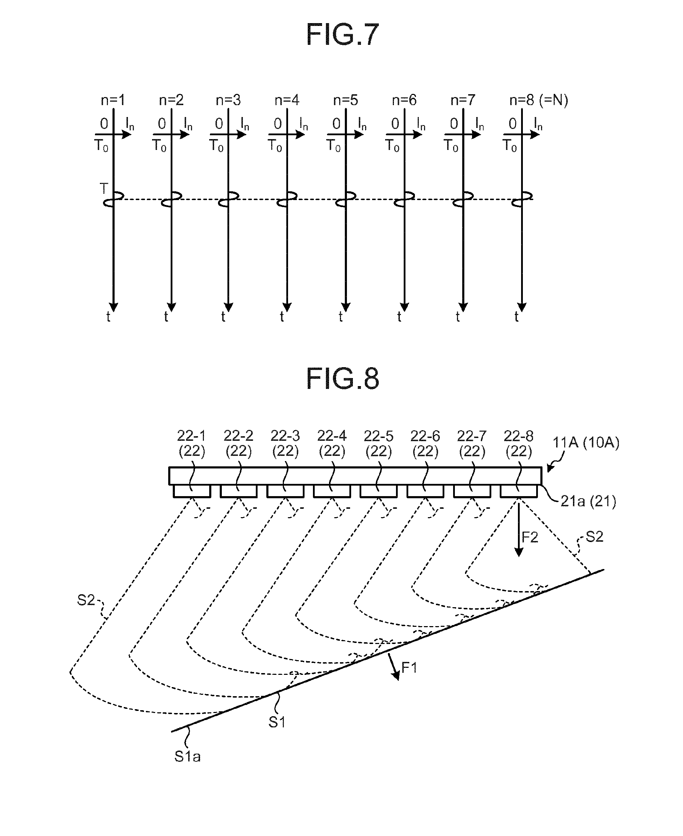

A comparative example will be described. As illustrated in FIG. 6, an ultrasonic generator 1011 of the comparative example includes the ultrasonic transducers 22 in substantially the same position in the frontal direction F2 of the ultrasonic transducers 22. In other words, the ultrasonic transducers 22 are arranged in a planar manner. As illustrated in FIG. 7, the drive signals are supplied to the respective ultrasonic transducers 22 without phase difference (delay), and the currents are supplied to the respective ultrasonic transducers 22 without phase difference. In such an ultrasonic generator 1011, all the ultrasonic transducers 22 are simultaneously supplied with the maximum consumption currents at a certain time point, so that the maximum value of the instantaneous power consumption is relatively larger. In contrast, in the first embodiment, all the ultrasonic transducers 22 are not simultaneously supplied with the maximum consumption currents, so that the maximum value of the instantaneous power consumption is relatively smaller.

The ultrasonic transducers 22-2 to 22-8 are located in positions that are more frontward in the frontal direction F2 of the ultrasonic transducer 22-1 than the ultrasonic transducer 22-1 and in which the traveling direction F1 of the combined wave front S1a of the ultrasonic wave S1 (first combined wave) is aligned with the frontal direction F2 of the ultrasonic transducer 22-1, the ultrasonic wave S1 (first combined wave) being formed by combining the ultrasonic waves S2 generated by the ultrasonic transducer 22-1 and the ultrasonic transducers 22-2 to 22-8. As a result, even if the phases of the drive signals are changed, the traveling direction F1 of the combined wave front S1a of the ultrasonic wave S1 can be aligned with the frontal direction F2 of the ultrasonic transducer 22-1. For example, an operator considers that the ultrasonic wave travels in the frontal direction of the speaker in a case where the speaker is a commonly used speaker. Therefore, by aligning the traveling direction F1 of the combined wave front S1a of the ultrasonic wave S1 with the frontal direction F2 of the ultrasonic transducers 22, it is possible to prevent the speaker 11 being mounted at a wrong attitude by the operator.

The movable reflecting member 41 reflects the ultrasonic wave S1 toward the target object 100, and linearly scans the ultrasonic wave S1 on the target object 100. This operation eliminates the need for moving the speaker 11 to scan the ultrasonic wave S1 the target object 100. A method can be considered in which the speaker 11 is mechanically rotated to control the direction of emission of the ultrasonic wave S1. However, the total mass of the speaker 11 increases as the number of the ultrasonic transducers 22 increases, so that the mechanism for rotating the speaker 11 might be complicated. In contrast, in the first embodiment, the mass of the movable reflecting member 41 can easily be reduced depending on the design of the movable reflecting member 41, so that the scan unit 13 can easily be kept from being complicated, leading to reduction in loads, for example, on the motor of the scan unit 13.

### Second Embodiment

A second embodiment will be described below with reference to FIG. 8. An ultrasonic generator 10A of the second embodiment has a configuration similar to that of the ultrasonic generator 10 of the first embodiment. This configuration allows the second embodiment to provide the same effects as those of the first embodiment. The ultrasonic generator 10A of the second embodiment, however, differs from the ultrasonic generator 10 of the first embodiment mainly in the arrangement of the ultrasonic transducers 22 of a speaker 11A. In the second embodiment, the positions of the respective ultrasonic transducers 22 are substantially the same in the frontal direction F2 of the ultrasonic transducers 22. In other words, the ultrasonic transducers 22 are arranged in a planar manner. The ultrasonic transducers 22 having such a positional relation are driven at different phases in the same way as in the first embodiment. As a result, the traveling direction F1 of the combined wave front S1a of the ultrasonic wave S1 inclines relative to the frontal direction F2 of the ultrasonic transducers 22. In the second embodiment, the movable reflecting member 41 controls the traveling direction F1 of the ultrasonic wave S1 by reflecting the ultrasonic wave S1 having the inclined combined wave front S1a, and scans the ultrasonic wave S1 the target object 100.

As described above, in the second embodiment, the ultrasonic transducers 22 are arranged in a planar manner, so that the ultrasonic wave S1 emitted from the speaker 11A forms a certain angle with the frontal direction F2 of the ultrasonic transducers 22. However, reflecting the ultrasonic wave S1 on the movable reflecting member 41 allows the ultrasonic wave S1 to propagate in any direction.

### Third Embodiment

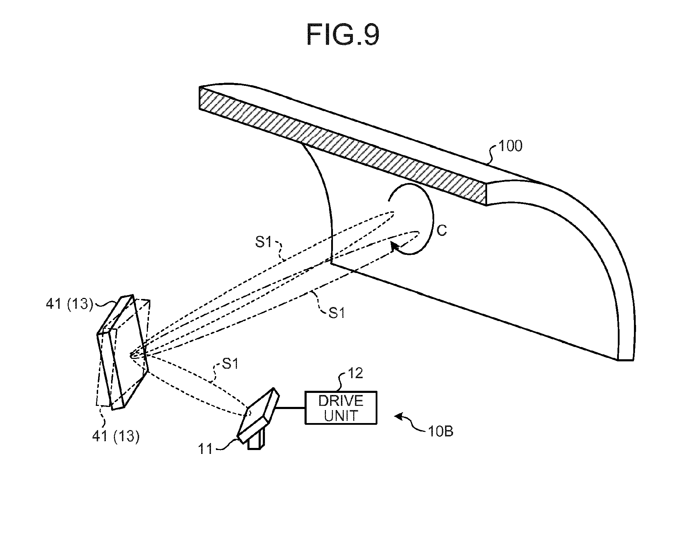

A third embodiment will be described below with reference to FIG. 9. An ultrasonic generator 10B of the third embodiment has a configuration similar to that of the ultrasonic generator 10 of the first embodiment. This configuration allows the third embodiment to provide the same effects as those of the first embodiment. The ultrasonic generator 10B of the third embodiment, however, differs from the ultrasonic generator 10 of the first embodiment mainly in the scanning operation of the scan unit 13. In the third embodiment, the scan unit 13 scans the ultrasonic wave S1 in a circular manner. Specifically, the movable reflecting member 41 is provided so as to be rotatable about two axes. The movable reflecting member 41 is driven by a motor to circularly scan (conically scan) the ultrasonic wave S1 on the target object 100. In FIG. 9, arrow C indicates an example of the direction for scanning the ultrasonic wave S1. The movable reflecting member 41 may be capable of both the linear scanning and the circular scanning of the ultrasonic wave S1. As can be understood from the third embodiment and the first embodiment, the movable reflecting member 41 is configured to be capable of performing either the linear scanning or the circular scanning of the ultrasonic wave S1. The third embodiment may be applied to the second embodiment.

### Fourth Embodiment

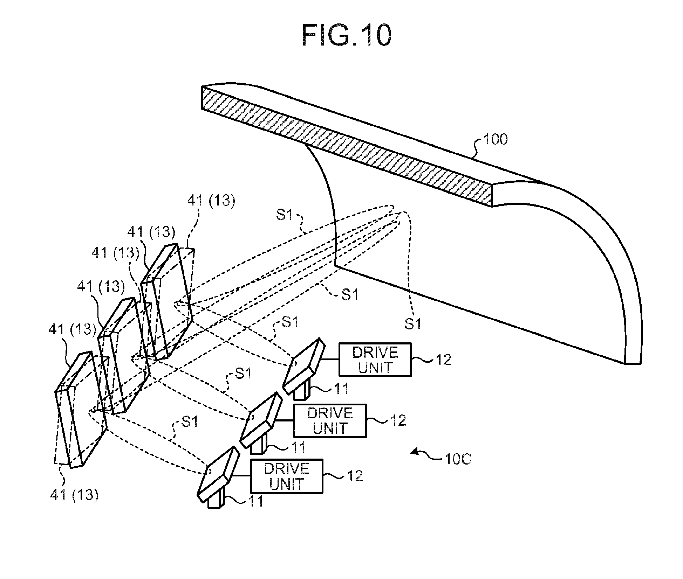

A fourth embodiment will be described below with reference to FIG. 10. An ultrasonic generator 10C of the fourth embodiment has a configuration similar to that of the ultrasonic generator 10 of the first embodiment. This configuration allows the fourth embodiment to provide the same effects as those of the first embodiment. The ultrasonic generator 10C of the fourth embodiment, however, differs from the ultrasonic generator 10 of the first embodiment mainly in that a plurality of such speakers 11 are provided, and each of the speakers 11 is provided with the drive unit 12 and the scan unit 13 (movable reflecting member 41). In the fourth embodiment, each of the speakers 11 includes the ultrasonic transducers 22. Each of the movable reflecting members 41 individually controls the traveling direction F1 of the ultrasonic wave S1. The movable reflecting members 41 reflect the ultrasonic waves S1 in directions in which the ultrasonic waves S1 reflected by the respective movable reflecting members 41 come closer to one another as the ultrasonic waves S1 proceed toward the target object 100. The ultrasonic waves S1 overlap (are combined) with one another. This overlap can apply a strong acoustic excitation force to the target object 100. By controlling the angles of the movable reflecting members 41 so that the reflected ultrasonic waves S1 are focused on one point of the target object 100, a higher sound pressure can be produced at the focused point of the ultrasonic waves S10. The fourth embodiment may be applied to the second or third embodiment.

### Fifth Embodiment

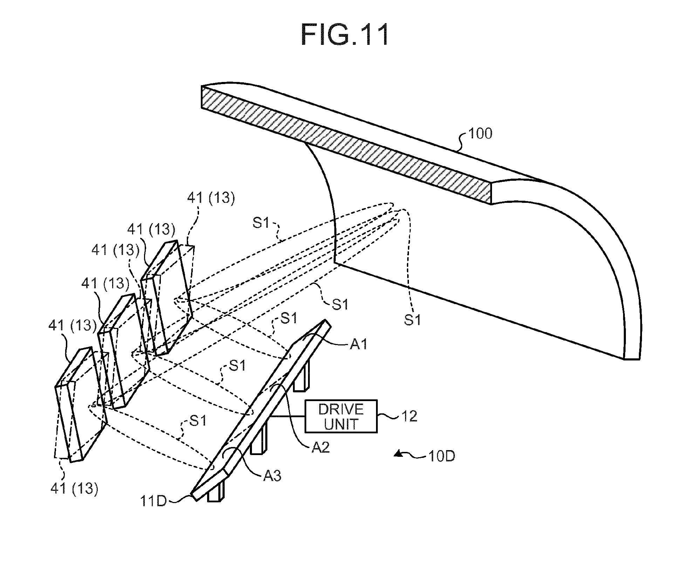

A fifth embodiment will be described below with reference to FIGS. 11 to 14. An ultrasonic generator 10D of the fifth embodiment has a configuration similar to that of the ultrasonic generator 10 of the first embodiment. This configuration allows the fifth embodiment to provide the same effects as those of the first embodiment. The ultrasonic generator 10D of the fifth embodiment, however, differs from the ultrasonic generator 10 of the first embodiment mainly in including a speaker 11D and in the method for driving the speaker 11D.

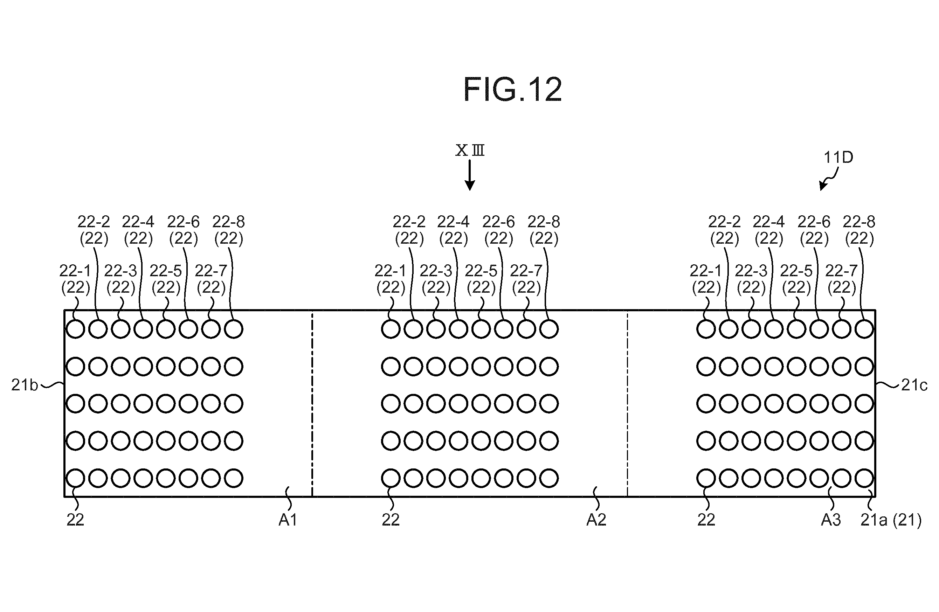

As illustrated in FIGS. 11 and 12, the mounting surface 21a of the substrate 21 of the speaker 11D is provided with three (a plurality of) areas A1 to A3 as an example. The area A1 includes the side 21b; the area A3 includes the other side 21c; and the area A2 is located between the area A1 and the area A3. The area A2 is an example of a first area, and each of the areas A1 and A3 is an example of a second area. The length between the side 21b and the other side 21c of the substrate 21 of the speaker 11D is larger than the length between the side 21b and the other side 21c of the substrate 21 of the speaker 11 in the first embodiment.

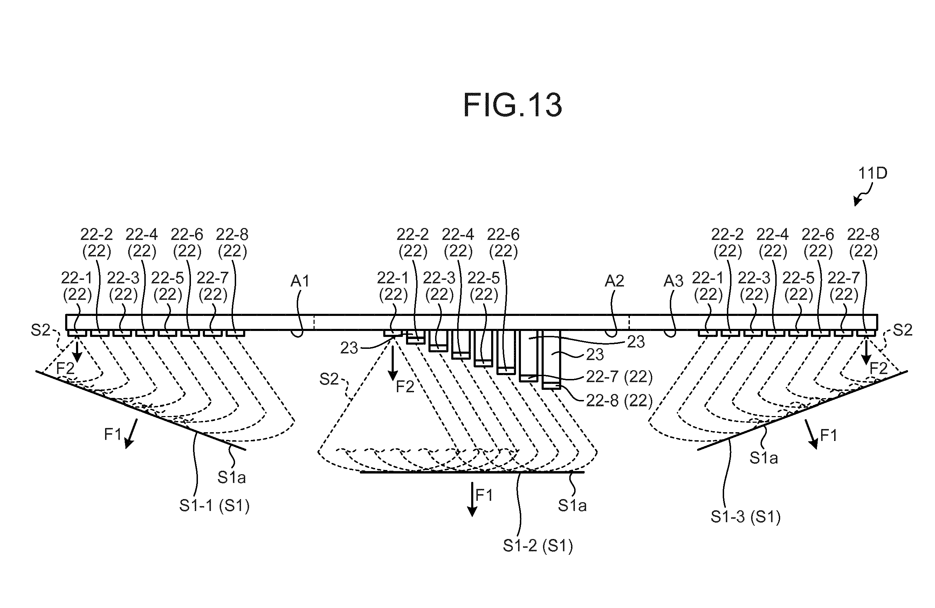

The ultrasonic transducers 22 are arranged in each of the areas A1 to A3. As illustrated in FIGS. 12 and 13, the ultrasonic transducers 22 are arranged in the area A2 in the same stepwise arrangement as in the case of the first embodiment. The ultrasonic transducers 22 are arranged in each of the areas A1 and A3 in the same planar arrangement as in the case of the second embodiment. In the fifth embodiment, the ultrasonic transducer 22-1 in the area A2 corresponds to the first ultrasonic transducer, and the ultrasonic transducers 22-2 to 22-8 in the area A2 correspond to the second ultrasonic transducers. Each of the ultrasonic transducer 22-8 in the area A1 and the ultrasonic transducer 22-1 in the area A3 corresponds to a third ultrasonic transducer, and the ultrasonic transducers 22-1 to 22-7 in the area A1 and the ultrasonic transducers 22-2 to 22-8 in the area A3 correspond to fourth ultrasonic transducers. In other words, the area A1 (second area) is provided with the ultrasonic transducer 22-8 as the third ultrasonic transducer among the ultrasonic transducers 22, and with the ultrasonic transducers 22-1 to 22-7 as some of the fourth ultrasonic transducers among the ultrasonic transducers 22; the area A2 (first area) is provided with the ultrasonic transducer 22-1 as the first ultrasonic transducer, and with the ultrasonic transducers 22-2 to 22-8 as the second ultrasonic transducers; and the area A3 is provided with the ultrasonic transducer 22-1 as the third ultrasonic transducer among the ultrasonic transducers 22, and with the ultrasonic transducers 22-2 to 22-8 as some of the fourth ultrasonic transducers among the ultrasonic transducers 22.

In the fifth embodiment, the ultrasonic transducers 22 in each of the areas A1 to A3 generate the ultrasonic wave S1. For the sake of convenience of explanation, the ultrasonic wave S1 formed by combining the ultrasonic waves S2 generated by the ultrasonic transducers 22 in the area A1 is also called "ultrasonic wave S1-1"; the ultrasonic wave S1 formed by combining the ultrasonic waves S2 generated by the ultrasonic transducers 22 in the area A2 is also called "ultrasonic wave S1-2"; and the ultrasonic wave S1 formed by combining the ultrasonic waves S2 generated by the ultrasonic transducers 22 in the area A3 is also called "ultrasonic wave S1-3".

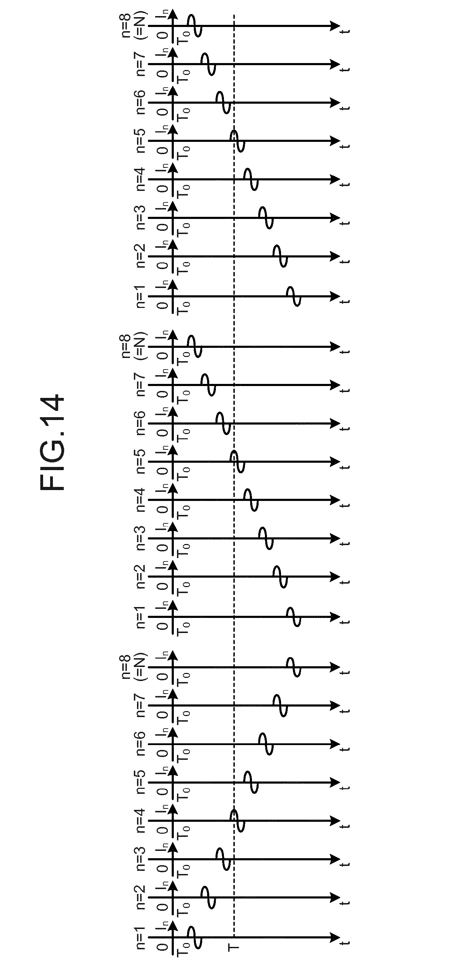

The drive unit 12 individually controls the ultrasonic transducers 22 in each of the areas A1 to A3. As illustrated in FIG. 14, the drive unit 12 drives the ultrasonic transducers 22 in the area A2 in the same manner as in the case of the first embodiment. This operation advances the combined wave front S1a of the ultrasonic wave S1-2 along the frontal direction F2 of the ultrasonic transducers 22, that is, along the frontal direction of the substrate 21, as illustrated in FIG. 13. The drive unit 12 drives the ultrasonic transducers 22 in the area A3 in the same manner as in the case of the second embodiment, as illustrated in FIG. 14. This operation advances the combined wave front S1a of the ultrasonic wave S1-3 in a direction inclined from the frontal direction F2 of the ultrasonic transducers 22 and away from the ultrasonic wave S1-2, as illustrated in FIG. 13. Detailed description of driving the ultrasonic transducers 22 in the areas A2 and A3 overlaps the descriptions in the first and second embodiments, and therefore, will not be given. As can be understood from FIG. 14, the drive unit 12 sets the phases of the drive signals (currents) to the ultrasonic transducers 22 in the area A1 differently from those of the ultrasonic transducers 22 in the areas A2 and A3. Specifically, the phase setting unit 34 uses the ultrasonic transducer 22-8 as the reference in the phase difference control. The phase setting unit 34 changes the phases of the drive signals by delaying the drive signals supplied to the ultrasonic transducers 22-1 to 22-7 relative to the drive signal supplied to the ultrasonic transducer 22-8. The phase setting unit 34 sequentially increases the delay amount relative to the drive signal supplied to the ultrasonic transducer 22-8 from the ultrasonic transducer 22-7 to the ultrasonic transducer 22-1. This configuration advances the combined wave front S1a of the ultrasonic wave S1-1 in a direction inclined from the frontal direction F2 of the ultrasonic transducers 22 and away from the ultrasonic wave S1-2, as illustrated in FIG. 13. The combined wave front S1a of the ultrasonic wave S1-1 and the combined wave front S1a of the ultrasonic wave S1-3 proceed in directions away from each other.

As can be understood from the above, in the fifth embodiment, the ultrasonic transducers 22-1 to 22-7 in the area A1 are located in positions in which the combined wave front S1a of the ultrasonic wave S1-1 (second combined wave) formed by the ultrasonic waves S2 generated by the respective ultrasonic transducers 22-1 to 22-8 in the area A1 proceeds in the direction away from the combined wave front S1a of the ultrasonic wave S1-2. In the same way, the ultrasonic transducers 22-2 to 22-8 in the area A3 are located in positions in which the combined wave front S1a of the ultrasonic wave S1-3 (second combined wave) formed by the ultrasonic waves S2 generated by the respective ultrasonic transducers 22-1 to 22-8 in the area A3 proceeds in the direction away from the combined wave front S1a of the ultrasonic wave S1-2.

The drive unit 12 changes the phases of the drive signals supplied to the ultrasonic transducers 22-2 to 22-8 in the area A2 relative to the drive signal supplied to the ultrasonic transducer 22-1 in the area A2, and also changes the phases of the drive signals supplied to the ultrasonic transducers 22-1 to 22-7 in the area A1 and the ultrasonic transducers 22-2 to 22-8 in the area A3 relative to the drive signals supplied to the ultrasonic transducer 22-8 in the area A1 and the ultrasonic transducer 22-1 in the area A3. In this way, the drive unit 12 causes the sum of the consumption currents of the respective ultrasonic transducers 22 at the same time point to be lower than the sum of the maximum consumption currents of the respective ultrasonic transducers 22. As a result, the instantaneous power consumption of the ultrasonic generator 10D can be reduced in the same way as in the first embodiment.

In the fifth embodiment, each of the areas A1 to A3 is provided with the scan unit 13 (movable reflecting member 41). A plurality of such movable reflecting members 41 reflect the ultrasonic waves S1-1 to S1-3 in directions in which the ultrasonic waves S1-1 to S1-3 reflected by the respective movable reflecting members 41 come closer to one another as the ultrasonic waves S1-1 to S1-3 proceed toward the target object 100. The ultrasonic waves S1-1 to S1-3 overlap (are combined) with one another. As a result, the target object 100 can be oscillated with a strong acoustic excitation force.

As can be understood from the above, in the fifth embodiment, the traveling direction F1 of the ultrasonic wave S1 in each of the areas A1 to A3 is individually controlled. This control makes it easy to increase the sound pressure by overlapping the ultrasonic waves S1, and makes it easier to reduce the size of the ultrasonic generator 10D than in the case of the configuration of providing a plurality of such substrates 21. The fifth embodiment may be applied to the second or third embodiment.

### Sixth Embodiment

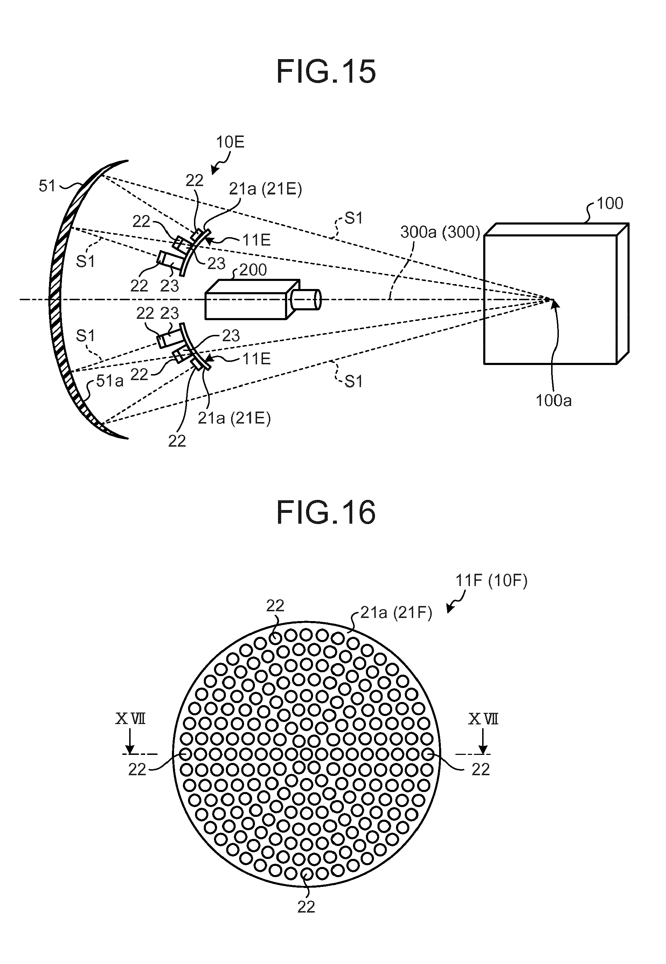

A sixth embodiment will be described below with reference to FIG. 15. An ultrasonic generator 10E of the sixth embodiment has a configuration similar to that of the ultrasonic generator 10 of the first embodiment. This configuration allows the sixth embodiment to provide the same effects as those of the first embodiment. The ultrasonic generator 10E of the sixth embodiment, however, differs from the ultrasonic generator 10 of the first embodiment mainly in that a plurality of speakers 11E are provided, and a reflecting member 51 (sound reflecting mirror) is provided. The ultrasonic generator 10E is not provided with the movable reflecting member 41.

In the sixth embodiment, a vibration measuring device 200 is placed in a position facing the target object 100. The vibration measuring device 200 receives reflected light of a laser beam 300 emitted to a measurement region 100a (surface) of the target object 100 and reflected on the measurement region 100a. Based on the received reflected light, the vibration measuring device 200 measures vibration of the surface of the target object 100 produced by the oscillation caused by the ultrasonic generator 10E. The vibration measuring device includes, for example, the laser Doppler vibrometer. The vibration measuring device 200 may include an optical member, such as a reflecting mirror, in addition to the laser Doppler vibrometer (vibrometer).

The reflecting member 51 includes a concave reflecting surface 51a (concave reflecting mirror). The reflecting surface 51a faces the vibration measuring device 200 on the side opposite to a side of the vibration measuring device 200 from which the laser beam 300 is emitted. The reflecting surface 51a reflects the ultrasonic wave S1 toward the measurement region 100a. The reflecting member 51 is formed from, for example, a synthetic resin material such as an acrylic resin. The reflecting member 51 may be formed from a material other than the synthetic resin material.

Each of the speakers 11E includes the ultrasonic transducers 22. The number of the ultrasonic transducers 22 may be the same as, or different from, that in the speaker of the first embodiment. FIG. 15 illustrates an example in which the number of the ultrasonic transducers 22 differs from that in the speaker 11 of the first embodiment. A substrate 21E of each of the speakers 11E is curved along the reflecting surface 51a. The substrate 21E, however, need not be curved. The speakers 11E are located in positions deviate from an optical axis 300a of the laser beam 300. The speakers 11E are located in positions separated, in the direction orthogonal to the drawing surface of FIG. 15, from the ultrasonic waves S1 reflected on the reflecting member 51, so that the reflected ultrasonic waves S1 do not hit the speakers 11E.

As described above, in the sixth embodiment, the reflecting member 51 includes the concave reflecting surface 51a, so that the speakers 11E can be easily arranged near the vibration measuring device 200 to emit the ultrasonic waves S1 of the speakers 11E onto the position on the target object 100 irradiated with the laser beam 300 of the vibration measuring device 200. As a result, the size of the ultrasonic generator 10E can be easily reduced. The arrangement of the ultrasonic transducers 22 in each of the speakers 11E may be the same as that of the second embodiment.

### Seventh Embodiment

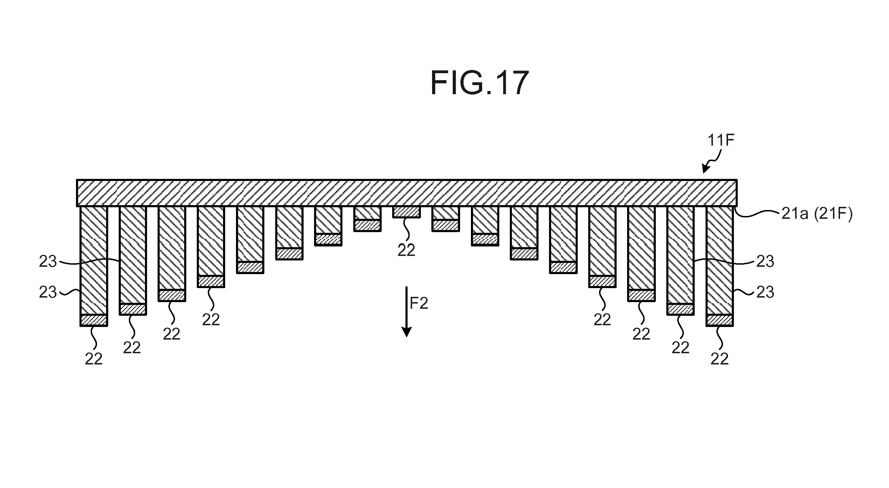

A seventh embodiment will be described below with reference to FIGS. 16 and 17. An ultrasonic generator 10F of the seventh embodiment has a configuration similar to that of the ultrasonic generator 10 of the first embodiment. This configuration allows the seventh embodiment to provide the same effects as those of the first embodiment. However, mainly a speaker 11F of the seventh embodiment has a different shape from that of the speaker 11 of the first embodiment.

A substrate 21F of the speaker 11F of the present embodiment is formed in a circular plate-like shape. However, the substrate 21F may be, for example, rectangular. The ultrasonic transducers 22 are located in positions in which the traveling direction F1 of the combined wave front S1a of the ultrasonic wave S1 is aligned with the frontal direction F2 of the ultrasonic transducer 22-1. Specifically, as an example, the ultrasonic transducers 22 are arranged so as to form a bowl-like (concave) shape (FIG. 17).

As each of the ultrasonic transducers 22 is more distant from the mounting surface 21a on the basis of the ultrasonic transducer 22 closest to the mounting surface 21a of substrate 21F among the ultrasonic transducers 22, the phase setting unit 34 increases the delay amount of the drive signal supplied to the ultrasonic transducers 22. In this way, the phase setting unit 34 causes the sum of the consumption currents of the respective ultrasonic transducers 22 at the same time point to be lower than the sum of the maximum consumption currents of the respective ultrasonic transducers 22. As a result, the seventh embodiment can also reduce the instantaneous power consumption of the ultrasonic generator 10F.

In the seventh embodiment, the ultrasonic transducers 22 are arranged so as to form a bowl-like (concave) shape, and can thereby make the length in the frontal direction F2 of the speaker 11F smaller than that of, for example, a speaker in which the ultrasonic transducers 22 of FIG. 17 are arranged so that each thereof is more distant from the mounting surface 21a of the substrate 21F as the position thereof shifts from left to right. The ultrasonic transducers 22 may be arranged so as to form a mound-like (convex) shape. This arrangement can also make the length in the frontal direction F2 of the speaker 11F smaller than that of, for example, a speaker in which the ultrasonic transducers 22 of FIG. 17 are arranged so that each thereof is more distant from the mounting surface 21a of the substrate 21F as the position thereof shifts from left to right. In the case in which the ultrasonic transducers 22 are arranged so as to form a mound-like (convex) shape, as each of the ultrasonic transducers 22 is more distant from the mounting surface 21a on the basis of the ultrasonic transducer 22 closest to the mounting surface 21a of substrate 21F among the ultrasonic transducer 22, the phase setting unit 34 also increases the delay amount of the drive signal supplied to the ultrasonic transducers 22. The seventh embodiment may be applied to any of the third to sixth embodiments.

As described above, the embodiments given above can reduce the instantaneous power consumption of the ultrasonic generators 10 and 10A to 10F.

While several embodiments have been described, the embodiments have been presented as examples, and are not intended to limit the scope of the invention. These new embodiments can be carried out in various other forms, and can be variously omitted, replaced, or modified within the scope not departing from the gist of the invention. The embodiments and modifications thereof are included in the scope and the gist of the invention, and also included in the scope of the invention described in the claims and the equivalents thereof. For example, the phase difference of the drive signal of each of the ultrasonic transducers 22 may be other than one wavelength, and only needs to be set so that the drive signals (currents) of all the ultrasonic transducers 22 do not reach the maximum amplitude at the same time point. The shape of the substrate 21 may be other than a rectangle or a circle, and may be a polygon except a rectangle or an ellipse. The arrangement of the ultrasonic transducers 22 is not limited to be stepwise, bowl-like, or mound-like.

In this kind of ultrasonic generators, it is advantageous to reduce instantaneous power consumption that is power consumed at an instant.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An ultrasonic generator (10) comprising:
a plurality of ultrasonic transducers (22) each configured to generate an ultrasonic wave; and
a drive unit (12) configured to supply a drive signal generating the ultrasonic wave to each of the ultrasonic transducers (22), and configured to change phase of the drive signal supplied to a second ultrasonic transducer (22-2) among the ultrasonic transducers (22) relative to the drive signal supplied to a first ultrasonic transducer (22-1) among the ultrasonic transducers (22), wherein
the second ultrasonic transducer (22-2) is located in a position in which a traveling direction of a combined wave front of a first combined wave is aligned with a frontal direction, the first combined wave being formed by combining the ultrasonic waves generated by each of the first ultrasonic transducer (22-1) and the second ultrasonic transducer (22-2), wherein the position is more frontward in the frontal direction of the first ultrasonic transducer (22-1) than the first ultrasonic transducer (22-1).

2. The ultrasonic generator (10) according to claim 1, further comprising a movable reflecting member (41) configured to reflect the first combined wave toward a target object (100), and configured to scan the first combined wave on the target object (100).

3. The ultrasonic generator (10) according to claim 2, wherein the movable reflecting member (41) is configured to be capable of performing either linear scanning or circular scanning of the first combined wave.

4. The ultrasonic generator (10) according to claim 2 or 3, further comprising a plurality of speakers (11) each including the ultrasonic transducers (22), wherein
the movable reflecting member (41) is provided in each of the speakers (11), and
the movable reflecting members (41) are configured to reflect the first combined waves in directions in which the first combined waves reflected by the respective movable reflecting members (41) come closer to one another as the first combined waves proceed toward the target object (100).

5. The ultrasonic generator (10) according to claim 1, further comprising a substrate (21) including a first area (A2) and a second area (A1, A3), the first area (A2) being provided with the first ultrasonic transducer (22-1/A2) and the second ultrasonic transducer (22-2/A2), the second area (A1, A3) being provided with a third ultrasonic transducer (22-8/A1, 22-1/A3) among the ultrasonic transducers (22) and fourth ultrasonic transducer (22-1/A1, 22-2/A3) among the ultrasonic transducers (22), wherein
the drive unit (12) is configured to change the phase of the drive signal supplied to the second ultrasonic transducer (22-2/A2) relative to the drive signal supplied to the first ultrasonic transducer (22-1/A2), and is configured to change phase of the drive signal supplied to the fourth ultrasonic transducer (22-1/A1, 22-2/A3) relative to the drive signal supplied to the third ultrasonic transducer (22-8/A1, 22-1/A3), and
the fourth ultrasonic transducer (22-1/A1, 22-2/A3) is located in position in which a combined wave front of a second combined wave proceeds in a direction away from the combined wave front of the first combined wave, the second combined wave being formed by the ultrasonic waves generated by each of the third ultrasonic transducer (22-8/A1, 22-1/A3) and the fourth ultrasonic transducer (22-1/A1, 22-2/A3).

6. The ultrasonic generator (10) according to claim 1, further comprising:
a plurality of speakers (11E) each including the ultrasonic transducers (22) and configured to emit the first combined wave; and
a reflecting member (51) including a concave reflecting surface (51a) that faces a vibration measuring device (200) emitting a laser beam to a measurement region (100a) of a target object (100), on a side opposite to a side of the vibration measuring device (200) from which the laser beam is emitted, and that reflects the first combined wave toward the measurement region (100a), wherein
the speakers (11E) are located in positions deviate from an optical axis of the laser beam.

7. The ultrasonic generator (10) according to any one of claims 1 to 6, wherein
the drive unit (12) is configured to change the phase by delaying the drive signal supplied to the second ultrasonic transducer (22-2) relative to the drive signal supplied to the first ultrasonic transducer (22-1), and
the second ultrasonic transducer (22-2) is located more frontward in the frontal direction as a delay amount of the drive signal supplied to the second ultrasonic transducer (22-2) increases relative to the drive signal supplied to the first ultrasonic transducer (22-1).

8. An ultrasonic generator (10) comprising:
a plurality of ultrasonic transducers (22) each configured to generate an ultrasonic wave;
a drive unit (12) configured to supply a drive signal generating the ultrasonic wave to each of the ultrasonic transducers (22), and configured to change a phase of the drive signal supplied to a second ultrasonic transducer (22-2) among the ultrasonic transducers (22) relative to the drive signal supplied to a first ultrasonic transducer (22-1) among the ultrasonic transducers (22); and
a movable reflecting member (41) configured to reflect a combined wave toward a target object (100), and configured to scan the combined wave on the target object (100), the combined wave being formed by combining the ultrasonic waves generated by each of the first ultrasonic transducer (22-1) and the second ultrasonic transducer (22-2).
